(19) Europäisches Patentamt
European Patent Office
Office européen des brevets

(11) Publication number: 0 035 615 B1

(12) # EUROPEAN PATENT SPECIFICATION

(45) Date of publication of patent specification: **12.03.86**

(51) Int. Cl.$^4$: **C 08 G 18/24**, C 08 G 18/14, C 07 F 9/02, C 07 F 7/22

(21) Application number: **80301156.8**

(22) Date of filing: **10.04.80**

(54) **Gel catalyst compositions and method for preparing flexible polyurethane foam.**

(30) Priority: **10.03.80 US 128848**

(43) Date of publication of application: **16.09.81 Bulletin 81/37**

(45) Publication of the grant of the patent: **12.03.86 Bulletin 86/11**

(84) Designated Contracting States: **AT BE CH DE FR GB IT LI NL SE**

(56) References cited: **US-A-4 085 072**

(73) Proprietor: **AIR PRODUCTS AND CHEMICALS, INC.**
**P.O. Box 538**
**Allentown, Pennsylvania 18105 (US)**

(72) Inventor: **Treadwell, Kenneth**
**930 Main Street**
**Rahway, New Jersey 07065 (US)**
Inventor: **Bossert, Emily C.**
**953 Summit Avenue**
**Westfield, New Jersey 07090 (US)**

(74) Representative: **Ellis, Edward Lovell et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 035 615 B1

Courier Press, Leamington Spa, England.

**Description**

This invention relates to the preparation of polyurethane foams. This invention further relates to the use of certain gel catalyst compositions to prepare polyurethane foams exhibiting high levels of oxidative stability relative to products obtained using conventional organotin catalysts or combinations of these organotin catalysts with compounds containing phosphorus and halogen. Certain of these catalyst compositions are novel and constitute part of this invention.

Flexible polyurethane foams are widely used in the manufacture of furniture, particularly seat cushions, and as packaging material for delicate instruments and other articles that are susceptible to damage during handling and transit. If the foam is incorporated into a piece of furniture or other durable product, the foam must withstand exposure of several years or longer to elevated temperatures, atmospheric oxygen, or both without undergoing significant degradation, resulting in a gradual loss of resiliency and structural strength which may culminate in disintegration of the foam.

It is well known to prepare flexible cellular polyurethanes by reacting polyols containing two or more reactive hydrogen atoms, as determined by the Zerewitinoff method, with polyfunctional isocyanates in the presence of a polymerization or gel catalyst and a blowing agent such as water or a relatively low boiling fluorocarbon.

A surfactant is often included in the reaction mixture together with a blowing catalyst to obtain the desired uniformly small cell size within the foam when water is used as the blowing agent. Fillers such as barytes and various additives such as flame retardants can also be present in the formulation employed to prepare the foam.

US—A—3,620,985 discloses that organotin compounds are effective gel catalysts for cellular polyurethanes. Compounds of the formula $R_aSnX_{4-a}$ wherein R is typically butyl or other alkyl radical containing from 1 to 20 carbon atoms and X is a halogen or other anionic radical are generally less than satisfactory for preparing flexible foams that are exposed to atmospheric oxygen, elevated temperature, i.e. above about 50°C, or both over extended periods of time. Under these conditions the foams may lose resiliency and structural integrity, sometimes to the extent that they disintegrate when compressed. This is particularly true of those foams derived from polyether-containing polyols that are derived at least in part from propylene oxide. These polyols may also contain ester linkages, (—OOCRCOO—), and end groups derived from ethylene oxide to obtain hydroxyl groups bonded to primary rather than secondary carbon atoms. High resiliency polyurethane foams prepared from polyols that contain side chains obtained by the graft polymerization of acrylonitrile, styrene or other vinyl monomer onto a poly(propylene oxide) backbone are usually less susceptible to oxidative and thermal degradation. However, in the presence of conventional organotin gel catalysts even these products undergo a significant decrease in structural strength and become brittle following prolonged exposure to oxygen and/or heat.

The resistance of flexible polyurethane foams based on polyether-containing polyols to oxidatively and thermally induced degradation can be improved by employing compounds containing phosphorus and a halogen in combination with the organotin gel catalyst. Catalyst compositions of this type are disclosed in US—A—3067149; 4048100; 4052346 and GB—A—1003201. This type of catalyst composition may be suitable for certain applications where resiliency is not a requirement, since foams prepared using these catalyst compositions typically recover only a small fraction of their original height within 30 minutes after being compressed to 10% of their original height for 22 hours at a temperature of 70°C, a conventional method for determining resiliency and dry heat stability of flexible polyurethane foams.

An objective of this invention is to improve the resiliency and dry heat stability of flexible polyurethane foams prepared from polyether-containing polyols using gel catalyst compositions containing an organotin compound, a phosphorus compound and a halogen compound.

It has surprisingly been found that this objective can be achieved by the use of the gel catalyst of this invention. This gel catalyst comprises an organotin compound where tin is in the tetravalent state, the compound containing phosphorus and at least one active halogen bonded to tin, or two organotin compounds where tin is in the tetravalent state, one compound containing phosphorus and the other compound containing at least one active halogen bonded to tin, the said phosphorus-containing organotin compound being an organotin ester of a phosphorus compound selected from ortho-phosphoric, meta-phosphoric, pyro-phosphoric, thio-phosphoric, phosphorous, phosphinic, phosphinous, phosphonous and phosphonic acids, phosphoryl chloride and oligomeric condensation products of 1) phosphonic acid, 2) mixtures containing phosphoric and phosphonic acids, or 3) esters of phosphoric and phosphonic acids and alcohols containing from 1 to 20 carbon atoms, the gel catalyst having the following characteristics, viz:

(a) the molar ratio of tin to phosphorus is from 0.045 to 23;

(b) the molar ratio of tin to active halogen is from 0.5 to 23;

(c) the molar ratio of phosphorus to active halogen is from 0.5 to 22; and

(d) in the case where tin, phosphorus and halogen are all in the same compound the catalyst contains a mono- or dicarboxylic acid having from 2 to 20 carbon atoms (possibly in combined form with the said compound).

It can be seen that the tin, phosphorus and halogen need not all be present in one compound but, if the three elements are in one compound, the catalyst contains a mono- or dicarboxylic acid with from 2 to 20

carbon atoms. The organotin comnpound may be dissolved in this carboxylic acid, or may be combined with the acid, as will later appear from the examples.

The invention also provides a method for preparing a flexible polyurethane foam by reacting a polyether-containing polyol with a polyfunctional isocyanate or isothiocyanate in the presence of a blowing agent and a gel catalyst as defined above.

The present gel catalysts are useful for preparing both flexible and rigid polyurethane foams from substantially all of the known polyether-containing polyols, polyfunctional isocyanates and blowing agents. The concentration of the catalyst is usually from 0.005 to 1%, based on the weight of polyol.

The present catalysts include organotin esters of monomeric or condensed phosphoric acid, thiophosphoric, phosphorous, phosphonous, phosphinic, phosphinous or phosphonic acid or phosphoryl chloride. Phosphoryl chloride is, in turn, a derivative of phosphoric acid. The organotin moiety

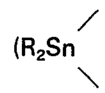 or 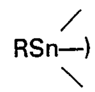

may be the only esterifying group present on the phosphorus-containing acid. Alternatively, the compound may be a mixed ester obtained by reacting an organotin halide or an organotin oxide or hydroxide with the desired phosphorus-containing ester derived from an alcohol or phenol. As used herein the term active halogen refers to fluorine, chlorine, bromine and iodine that is bonded directly to a tin or phosphorus atom. All of the present catalyst compositions contain an organotin compound bearing at least one active halogen atom.

The active halogen and the phosphorus atom can be present in the same organotin compound, such as dibutylchlorotin diethyl phosphite. Alternatively the catalyst composition may be a mixture of two organotin compounds, one containing phosphorus and the other containing an active halogen atom.

Organotin compounds containing both phosphorus and a halogen atom that are useful in-making gel catalysts in accordance with the present invention exhibit the general formula

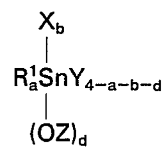 or 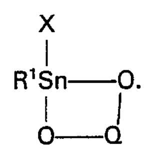

In the foregoing formulae a is 1 or 2, b is 0, 1 or 2, X represents an active halogen, $—OH$, $—OOCR^2$, $—OR^2$ or $—SR^3$ wherein $R^2$ is hydrocarbyl and $R^3$ is hydrocarbyl, $—R^4COOR^2$, or $—R^4OOCR^2$ wherein $R^4$ is alkylene and contains from 2 to 20 carbon atoms; d is 0, 1 or 2 with the proviso that d can be 0 only when the group represented by Y contains phosphorus;

Y is 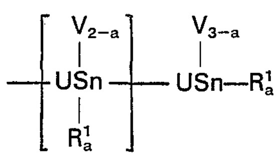

wherein V is —OZ or —X and p is 0 or an integer from 1 to 10; Z is

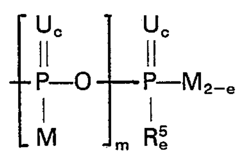 or 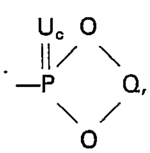

wherein M is $—R^6$, $—OR^7$, $-(OR^8)_fOZ$ or Y, wherein $R^5$ is hydrocarbyl, haloalkyl, halogen or Y, $R^6$ is hydrocarbyl, $R^7$ is hydrocarbyl or hydrogen. $R^8$ is $—CH_2CH_2—$ or $—CH(CH_3)CH_2—$, c is 0 or 1, f is an integer from 1 to 100 and m is 0 or an integer from 1 to 10; U is oxygen or sulfur, e is 1 or 2, $R^1$ is hydrocarbyl or $—R^8COOR^9$ wherein $R^9$ is hydrocarbyl and Q is

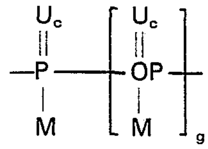

wherein g is 0 or an integer from 1 to 6.

If b in the foregoing formula is O and Y does not contain an active halogen atom, an organotin compound containing at least one tin to halogen bond must be included in the catalyst composition.

The term "hydrocarbyl" includes alkyl, cycloalkyl, aryl, aralkyl and alkaryl groups. Any alkyl group contains from 1 to 20 carbon atoms, and the preferred aryl group is phenyl.

Several organotin esters of phosphorus-containing acids and organic esters thereof are reported in the chemical literature. Compounds containing a single tin atom are prepared by reacting an organotin oxide or hydroxide with an organic ester of the desired phosphorus-containing acid under conditions conventionally employed for transesterification reactions and in the presence of a liquid hydrocarbon that forms an azeotropic mixture with the alcohol formed as a by-product of the transesterification reaction. Alternatively, the unesterified acid can be used or the desired organotin halide can be reacted with the sodium salt of the phosphorus-containing acid or a partial ester thereof.

If the final compound contains a fluorine, chlorine, bromine or iodine atom bonded to tin, the corresponding organohydroxyhalostannane or bis(dihydrocarbylhalo)distannoxane can be employed as the organotin reactant. An example of the former class of compounds is butylchlorodihydroxystannane $C_4H_9SnCl(OH)_2$. This class of compounds is disclosed in US—A—3758536.

Compounds containing one or more groups represented by Y in the aforementioned structural formula can be prepared using a reaction product of an organotin halide with a diorganotin oxide or organostannoic anhydride when U is oxygen.

When U represents sulfur, a diorganotin sulfide or organothiostannoic anhydride is employed. The molar ratio of organotin halide to the oxygen- or sulfur-containing compound is selected to achieve the desired value of p in the foregoing formula. Organotin compounds containing a plurality of tin atoms joined by sulfur or oxygen are well known in the chemical literature, and a detailed discussion concerning the preparation of these types of compounds in the present specification would be repetitious. The following reactions are typical, wherein Bu represents n-$C_4H_9$—.

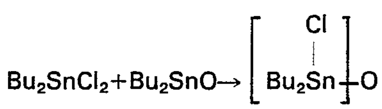

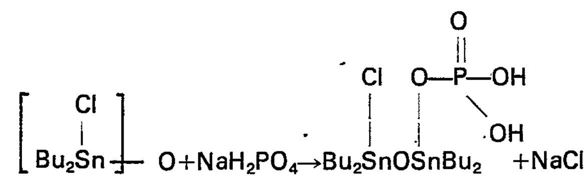

$$Bu_2SnCl_2+xBu_2SnO \rightarrow ClBu_2Sn(OSnBu_2)_xCl$$

$$ClBu_2Sn(OSnBu_2)_xCl+NaOP(OC_4H_9)_2 \rightarrow ClBu_2Sn(OSnBU_2)_xOP(OC_4H_9)_2.$$

Compounds of the general formula $ClBu_2Sn(OSnBu_2)_xCl$ can exist in linear form as shown. Alternatively these compounds can form cyclic structures wherein the ring contains a plurality of

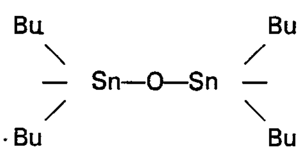

or

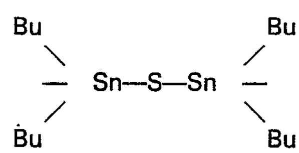

bonds and from 5 to 10 or more atoms. Cyclic compounds of this type are discussed in chapter 12 of a text entitled "The Chemistry of Organotin Compounds" by R. C. Poller (Academic Press, New York, 1970).

The organotin halide can be reacted with the phosphorus-containing acid or a partial or complete ester thereof prior to or following reaction of the organotin halide with the organotin compound containing oxygen or sulfur. An example of the former is represented by the reaction

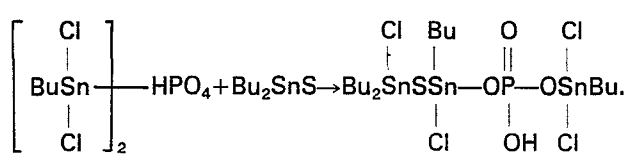

Additional tin atoms can be introduced into the molecule by increasing the molar ratio of the diorganotin sulfide. Alternatively, the corresponding diorganotin oxide can be used in place of the sulfide.

The foregoing reaction also demonstrates that the present compounds may contain both monoorganotin and diorganotin groups.

During preparation of the present compounds an alkali metal salt of the desired phosphorus-containing acid can be reacted with a bis(organohalotin)oxide using an alcohol as the reaction medium. This reaction proceeds relatively rapidly at a temperature from ambient to about 50°C. The advantage of using alcohol is that the reaction product is usually soluble and the sodium halide formed as a by-product precipitates from the reaction mixture. Alternatively, the free phosphorus-containing acid can be reacted with an organotin oxide or an organostannoic anhydride in a liquid hydrocarbon such as toluene that forms an azeotropic mxiture with the water formed as a by-product of the reaction. In this instance the reaction is conducted at the boiling point to remove the by-product water as it is formed, thereby providing a driving force for the reaction.

In addition to alcohols and liquid hydrocarbons, liquid mono- or dicarboxylic acids having from 2 to 20 carbon atoms can be used as the reaction medium for preparing the organotin compounds employed as gel catalysts in accordance with this invention. It has been found that if the resultant diluted reaction product is employed as a gel catalyst for a flexible polyurethane foam, the thermal stability and resiliency of the foam is superior relative to foams prepared in the absence of the acid.

The examples in our aforesaid copending European application disclose procedures for preparing the various compounds including phosphorus, tin and halogen that are useful for making the catalysts of the present invention.

Examples of specific compounds that are within the scope of this invention are represented by the formulae

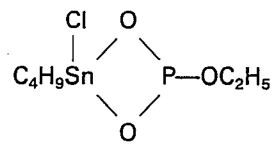

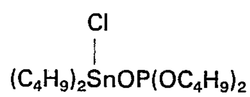

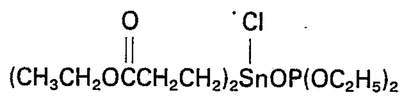

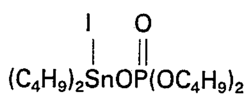

$(C_4H_9)_2Sn(Cl)OP(OC_2H_5)_2$

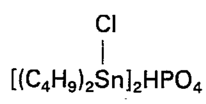

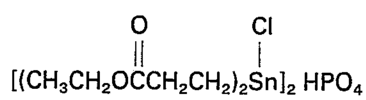

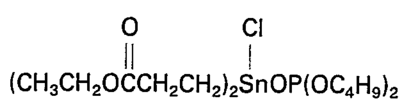

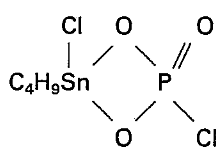

$C_8H_{17}Sn(Cl)[OP(OC_2H_5)_2]_2$

$C_4H_9Sn(Cl_2)OP(OC_2H_5)_2$

$CH_3Sn(Cl)(OH)OP(OC_2H_5)_2$

$C_4H_9Sn(Cl_2)H_2PO_4$

$C_6H_5Sn(Cl)(H_2PO_4)_2$

$(C_4H_9)_2Sn(Cl)H_2PO_4$

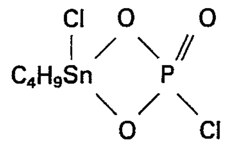

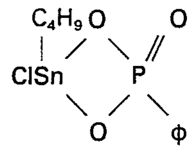

$[(C_4H_9)_2Sn(Cl)O]_2P(O)\Phi_2$

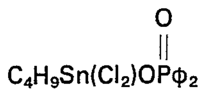

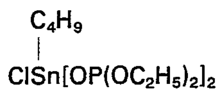

$(C_4H_9)_2Sn(Cl)SP(OC_2H_5)_2$

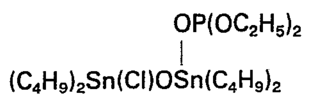

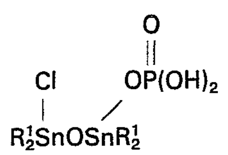

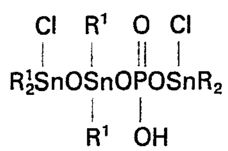

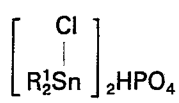

and

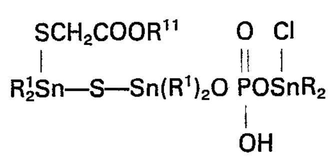

wherein $R^{11}$ is hydrocarbyl.

The last of the aforementioned compounds can be prepared by replacing a chlorine atom with a mercaptoester group using equimolar amounts of ester and organotin compound.

When the hydrocarbon group bonded to tin in the foregoing formulae is specified it is often shown as butyl. It should be obvious, however, that compounds containing other hydrocarbon groups, e.g. methyl, octyl, phenyl and cyclohexyl, would be equally suitable for use in the present catalyst compositions.

Flexible polyurethane foams of improved oxidative stability are prepared by reacting a polyfunctional isocyanate with a polyol containing ether (—C—O—C) or a combination of ether and ester

$$(-\overset{\overset{\displaystyle O}{\|}}{C}O-)$$

groups and two or more reactive hydrogen atoms as determined by the Zerewitinoff method.

In accordance with the present method, this reaction is catalyzed by one of the catalysts of this invention. This reaction is usually exothermic and occurs concurrently with gas evolution, resulting in formation of a cellular structure. The gas-evolving or blowing agent can be water, which reacts with excess polyfunctional isocyanate to yield carbon dioxide. Water can be used in combination with a volatile liquid fluorocarbon such as trichlorofluoromethane or dichloromethane.

When water is present as a blowing agent the reaction mixture may also contain a catalyst for the blowing or foaming reaction to coordinate the foaming and polymerization reactions, thereby retaining structural integrity and achieving the desired uniformly small cell size within the foam. Tertiary amines such as bis(N,N-dimethylaminoethyl) ether and triethylene diamine are preferred blowing catalysts. One to five tenths of one part by weight of blowing catalyst is usually employed for every one hundred parts of polyol. Silicon compounds, particularly reaction products of silanes with 1,2-olefin oxides, are often included as cell modifying agents, commonly referred to as surfactants.

If one or more amines are employed as blowing catalysts, these will also catalyze the reactions between the polyfunctional isocyanate and polyol. The use of amines as gel catalysts is well known in the prior art, however, amines are often less than satisfactory due to their low catalytic activity. In the past it was necessary to employ a prepolymer in order to attain the desired molecular weight while avoiding unduly long rise times.

The polyfunctional isocyanates used to prepare polyurethanes using the present gel catalysts include both polyisocyanates and polyisothiocyanates. While the invention is described with specific references to the reaction of certain diisocyanates, it is generically applicable to the reaction of any compound containing two or more —N=C=G radicals wherein G is oxygen or sulfur. Compounds within this generic definition include polyisocyanates and polyisothiocyanates of the formula $R(NCG)_x$ in which x is 2 or more. R can be alkylene, substituted arylene or other divalent hydrocarbon radical that may optionally contain one or more aryl-NCG bonds and one or more alkyl-NCG bonds.

Although a variety of organic polyisocyanates containing 3 or more isocyanate radicals per molecule can be used in the practice of this invention, diisocyanates are usually preferred in flexible foam formulations. Suitable isocyanates include alkylene diisocyanates such as hexamethylene diisocyanate, and decamethylene diisocyanate, the isomeric toluene diisocyanates and naphthalene diisocyanates, 4,4′-diphenylmethane diisocyanate and mixtures of two or more of the foregoing diisocyanates. Triisocyanates obtained by reacting 3 moles of an arylene diisocyanate for each mole of a triol, e.g., the products formed from 3 moles of tolylene diisocyanate and 1 mole of hexane triol may also be present in the reaction mixture. A preferred polyisocyanate is a mixture containing 80% by weight of the 2,4-isomer and 20 percent of the 2,6-isomer of toluene diisocyanate. Other suitable polyfunctional isocyanates include hexamethylene diisocyanate, xylylene diisocyanate, 1 - methyl - 2,4 - diisocyanates, diphenylmethane - 4,4′ - diisocyanate, naphthalene - 1,5 - diisocyanate, triphenylmethane - 4,4′,4″ - triisocyanate and xylene - α,α′ - diisothiocyanate. Oligomeric and polymeric isocyanates of the general formulae $(R\ NCG)_x$ and $[R\ (NCG)_x]_y$ in which x and y are between 2 and 10, are also useful in the present method, as are compounds of the general formula $M(NCG)_x$ wherein x is 2 or more and M is a difunctional or polyfunctional atom or group. An example of this type is polymethylene polyphenylisocyanate.

Suitable polyether-type polyols include polyalkylene glycols such as polyethylene glycols and polypropylene glycols. The molecular weight of these compounds is preferably between 200 and 5000.

As previously disclosed, polyols containing both ether and ester groups within the molecule are suitable for preparing polyurethane foams using the catalysts of this invention.

The preparation of polyurethane foams can be accomplished by forming a prepolymer, i.e. prereacting molar equivalents of a hydroxyl-terminated polyol and isocyanate in the absence of water and thereafter producing a foam by the addition of excess isocyanate, water and optionally other blowing agents and one of the present gel catalysts. Alternatively, foams may be produced by the "one-shot" method in which all of the reactants and catalysts are mixed together and allowed to react in the presence of water or other blowing agent.

The polyfunctional isocyanate is typically present in an amount of 5 to 300 percent, preferably from 30 to 50 percent by weight of the polyol. Water may optionally be present as a blowing agent to react with excess isocyanate and generate sufficient carbon dioxide to produce a foam of the desired density. The amount of water is between 1 and 10 percent, preferably between 2 and 5 percent, based upon the weight of the polyol.

The amount of isocyanate used can be in excess of the stoichiometric amount required to react with the active hydrogen atoms present in the polyol and any water present, thereby forming allophanate

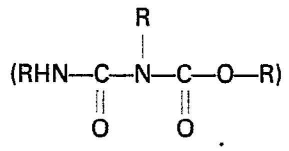 and biuret 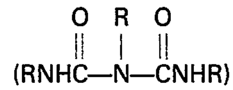

linkages in the polymer chains. Depending upon the desired density of the urethane foam and the amount of crosslinking desired, the ratio of equivalent weights of isocyanate groups to moles of active hydrogen atom present in the polyol and any water present should be from 0.8 to 1.2, respectively, preferably between 0.9 and 1.1.

The gel catalyst and one or more blowing catalysts are present in an amount corresponding to from 0.01 to 10 parts by weight per 100 parts of polyol. Preferably the gel catalyst is present in an amount corresponding to between 0.005 and 5.0 part by weight per 100 parts of polyol.

The formulation employed to prepare polyurethane foams using the gel catalysts of this invention may contain various additives conventionally incorporated into flexible polyurethane foams. These additives include fillers such as barytes and calcium carbonate, flame retarding agents such as antimony oxide and phosphorous compounds such as triphenylphosphine oxide.

In the following examples all parts and percentages are by weight unless otherwise specified.

Example 1

This example describes the preparation of dibutylchlorophosphatostannoxane dissolved in 2-ethylhexanoic acid.

A mixture containing 30.4 g (0.1 mole) of dibutyltin dichloride, 49.8 g (0.2 mole) of dibutyltin oxide and 250 cc of toluene was heated with stirring until a clear solution formed. A 11.5 g (0.1 mole) portion of an 85% aqueous solution of ortho-phosphoric acid was then added to the reactor and the resultant mixture was heated at the boiling point for two hours, during which time the water formed as a by-product was removed using a Dean-Stark receiver. The liquid phase of the reaction mixture was evaporated under reduced pressure and the resultant solid was dried in an oven at a temperature of 75°C and under a partial vacuum. The dried solid weighed 77.4 g and was found to contain 39.4% tin, 3.15% phosphorus and 7.61% chlorine. The calculated values for the expected product, which can be expressed by the empirical formula $Sn_3C_{24}H_{55}Cl_2PO_5$ are 40.4% tin, 3.52% phosphorus and 8.05% chlorine. This product was dissolved in 2-ethylhexanoic acid to form a 33% by weight solution which was subsequently evaluated as a gel catalyst for a polyurethane foam.

Example 2

This example demonstrates the preparation of a reaction product of bis(dibutylchlorotin)phosphate, dibutyltin sulfide and 2-ethylhexanoic acid.

In order to prepare bis(dibutylchlorotin)phosphate a glass reactor was charged with 91.1 g (0.3 mole) dibutyltin dichloride, 200 cc n-butanol, 50 cc water and 27.3 g (0.15 mole) dibasic sodium phosphate dihydrate. The resultant mixture was heated under a nitrogen atmosphere and the water removed by azeotropic distillation until the vapor temperature reached 117°C. The reaction mixture was then filtered and the liquid phase was concentrated under reduced pressure. The liquid residue solidified upon standing and weighed 83 g. The product was found to contain 34.60% tin, 11.18% chlorine and 4.42% phosphorus. The calculated values for these elements in the expected product are 37.53% tin, 11.21% chlorine and 4.90% phosphorus.

A mixture containing 6.33 g (0.01 mole) of the bis(dibutylchlorotin)phosphate and 2.65 g (0.01 mole) of dibutyltin sulfide was heated at a temperature of 70°C until a clear solution was obtained. At 17.96 g (0.12 mole) portion of 2-ethylhexanoic acid was added to this solution and the resultant mixture was heated at 70°C for several minutes to obtain a clear liquid. This liquid was then combined with 35.92 g of dipropylene glycol and subsequently evaluated as a gel catalyst for a flexible polyurethane foam.

Example 3

This example demonstrates the preparation of a reaction product of bis(dibutylchlorotin)phosphate, dibutyltin oxide and 2-ethylhexanoic acid.

A mixture containing 6.33 g (0.05 mole) of bis(dibutylchlorotin)phosphate, 12.45 g (0.01 mole) of dibutyltin oxide and 50 cc of toluene was heated under a nitrogen atmosphere using an oil bath. All of the solid material present dissolved to form a clear solution when the temperature of the oil bath reached 130°C. This solution was then concentrated by evaporation under reduced pressure to yield an amber-colored gel. One possible structure for this gel is

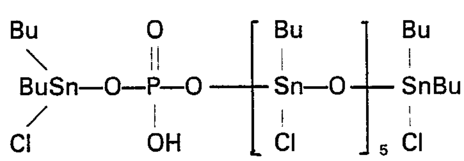

wherein Bu represents n-$C_4H_9$—. The gel was combined with 37.56 g (0.26 mole) of 2-ethylhexanoic acid and 75.12 g of dipropylene glycol. The resultant mixture was heated for 15 minutes at a temperature of 100°C until the gel dissolved. The solution weighed 124 g and was subsequently evaluated as a gel catalyst for a flexible polyurethane foam.

Example 4

This example describes the preparation of a reaction product of dibutyltin oxide, dibutyl tin dichloride, phosphoric acid and 2-ethylhexanoic acid.

A reactor was filled with nitrogen and charged with 670 g (4.7 moles) of 2-ethylhexanoic acid and 124.4 g (0.5 mole) of dibutyltin oxide. This mixture was heated at 50—55°C with stirring until a clear solution was obtained. The 8 g of water which formed as a by-product of this reaction were removed by heating the reaction mixture to 100°C under a pressure of 25—30 mm of mercury. The solution was then allowed to cool to 65—70°C, at which time 152 g (0.50 mole) of dibutyltin dichloride was added and the reaction mixture was heated at a temperature of 60°C for ½ an hour. A 58 g (0.5 mole) portion of phosphoric acid (as an 85% aqueous solution) was gradually added to the reactor. Following completion of the addition the reaction mixture was heated at 60°C for one hour. A 5 g portion of a filtration aid was added and the reaction mixture was filtered to remove solid materials. The resultant solution was found to contain 11.96% tin, 3.41% phosphorus and 1.55% chlorine. The calculated values for the expected reaction product are 12.5% tin, 3.75% phosphorus and 1.65% chlorine.

Example 5

The reaction products prepared using the procedure described in the foregoing examples were evaluated as gel catalysts in a flexible polyurethane foam formulation of the following composition:

| Ingredient | Parts by weight |
|---|---|
| Polyol[1] | 200 |
| Water | 7.0 |
| Surfactant[2] | 2.0 |
| Triethylene diamine[3] | 0.6 |
| N-Ethyl morpholine | 0.6 |
| Toluene diisocyanate[4] | 90.6 |

[1] An ethylene oxide-propylene oxide copolymer available as Niax® 16-56 from the Union Carbide Corporation.
[2] Poly(oxyethylene oxypropylene) siloxane.
[3] As a 33% by weight solution in dipropylene glycol.
[4] Isocyanate Index=105.

The reagents were blended for five seconds using a high speed mixer and then poured into a one liter-capacity polyethylene-lined paper cup and allowed to rise. Each of the resultant cylindrical foam samples was cut in half lengthwise and one of the halves was tested for oxidative and thermal stability in accordance with the procedure set forth in the American Society for Testing and Materials (ASTM) Test Method D-1564-71 (suffix A). The sample to be tested was placed in a circulating air oven at a temperature of 140°C for 22 hours, then withdrawn from the oven and allowed to cool for between 10 and 15 minutes. A portion of the flat surface of each sample was depressed to the maximum extent and the pressure released almost immediately. Samples that were sufficiently resilient to recover their original shape without any visible damage were considered to have passed the test and all others were considered failures.

The procedure employed to determine the 90% compression set value is described in the aforementioned ASTM test method, and consists of compressing a foam sample to 10% of its original height for 22 hours at a temperature of 70°C. The height of the foam sample is measured prior to compression and thirty minutes following release of compression. The 90% compression set value is calculated using the formula

$$90\% \text{ compression set}=(t_o-t_f/t_o-t_s)\times 100.$$

In the foregoing formula $t_o$ is the height of the foam sample prior to compression, $t_f$ is the height of the sample measured 30 minutes following the release of compression and $t_s$ is the height of the spacer bar employed in the test procedure described in the aforementioned ASTM method.

Polyurethane foams employed in seat cushions and mattresses should exhibit 90% compression set

values of less than about 15%. All of the present catalysts evaluated produced foams that were within this range. By comparison, foams prepared using several prior art catalyst compositions wherein the tin, phosphorus and halogen are distributed among two or three compounds exhibited 90% compression set values considerably above 15% and as high as 90%. These foams would not be suitable for use in seat cushions or mattresses.

The cream time, rise time, dry heat test results (pass or fail) and the 90% compression set values for three of the catalysts disclosed in the preceding examples are summarized in the following table together with the values obtained using stannous octoate as a control catalyst.

| Compound of Example | Catalyst level | Cream time | Rise time | Dry heat test | 90% Compression set |
|---|---|---|---|---|---|
| 1 | 0.2 | 59 | 113 | pass | 6.89 |
| 2 | 0.2 | 65 | 125 | pass | 6.4 |
| 3 | 0.2 | 61 | 117 | pass | 6.04 |
| 4 | 0.2 | 65 | 131 | pass | 5.79 |
| stannous octoate* | 0.3 | 53 | 94 | pass | 5.69 |

* control.

**Claims for the Contracting States: BE, CH, DE, FR, GB, IT, LI, LU, NL, SE**

1. A gel catalyst containing tin, phosphorus and active halogen (active halogen in this connection meaning halogen bonded directly to tin or phosphorus) the said catalyst comprising an organotin compound where tin is in the tetravalent state, the compound containing phosphorus and at least one active halogen bonded to tin, or two organotin compounds where tin is in the tetravalent state, one compound containing phosphorus and the other compound containing at least one active halogen bonded to tin, the said phosphorus-containing organotin compound being an organotin ester of a phosphorus compound selected from ortho-phosphoric, meta-phosphoric, pyro-phosphoric, thiophosphoric, phosphorous, phosphinic, phosphinous, phosphonous and phosphonic acids, phosphoryl chloride and oligomeric condensation products of 1) phosphonic acid, 2) mixtures containing phosphoric and phosphonic acids or 3) esters of phosphoric and phosphonic acids and alcohols containing from 1 to 20 carbon atoms, the gel catalyst having the following characteristics, viz:

a) the molar ratio of tin to phosphorus is from 0.045 to 23;

b) the molar ratio of tin to active halogen is from 0.5 to 23;

c) the molar ratio of phosphorus to active halogen is from 0.5 to 22; and

d) in the case where tin, phosphorus and halogen are all in the same compound the catalyst contains a mono- or dicarboxylic acid having from 2 to 20 carbon atoms (possibly in combined form with the said compound).

2. A gel composition according to claim 1 in which tin, phosphorus and halogen are all present in the same compound, and this is dissolved in a mono- or dicarboxylic acid containing from 2 to 20 carbon atoms.

3. A gel catalyst according to claim 1 which is the reaction product of a compound containing tin, phosphorus and halogen with a mono- or dicarboxylic acid containing from 2 to 20 carbon atoms.

4. A gel catalyst according to claim 2 or claim 3 wherein the acid is 2-ethyl hexanoic acid.

5. A method for preparing a flexible polyurethane foam by reacting a polyether-containing polyol with a polyfunctional isocyanate or isothiocyanate in the presence of a blowing agent and a gel catalyst according to any one of the preceding claims.

**Claims for the Contracting State: AT**

1. A method for preparing a flexible polyurethane foam by reacting a polyether-containing polyol with a polyfunctional isocyanate or isothiocyanate in the presence of a blowing agent and a gel catalyst containing tin, phosphorus and active halogen (active halogen in this connection meaning halogen bonded directly to tin or phosphorus) the said catalyst comprising an organotin compound where tin is in the tetravalent state, the compound containing phosphorus and at least one active halogen bonded to tin, or two organotin compounds where tin is in the tetravalent state, one compound containing phosphorus and the other compound containing at least one active halogen bonded to tin, the said phosphorus-containing organotin compound being an organotin ester of a phosphorus compound selected from ortho-phosphoric, meta-phosphoric, pyro-phosphoric, thiophosphoric, phosphorous, phosphinic, phosphinous, phosphonous and phosphonic acids, phosphoryl chloride and oligomeric condensation products of 1) phosphonic acid, 2) mixtures containing phosphoric and phosphonic acids or 3) esters of phosphoric and phosphonic acids and alcohols containing from 1 to 20 carbon atoms, the gel catalyst having the following characteristics, viz:

a) the molar ratio of tin to phosphorus is from 0.045 to 23;

b) the molar ratio of tin to active halogen is from 0.5 to 23;

c) the molar ratio of phosphorus to active halogen is from 0.5 to 22; and

d) in the case where tin, phosphorus and halogen are all in the same compound the catalyst contains a mono- or dicarboxylic acid having from 2 to 20 carbon atoms (possibly in combined form with the said compound).

2. A method according to claim 1, wherein the gel catalyst contains tin, phosphorus and halogen all present in the same compound, and this is dissolved in a mono- or dicarboxylic acid containing from 2 to 20 carbon atoms.

3. A method according to claim 1, wherein the gel catalyst is the reaction product of a compound containing tin, phosphorus and halogen with a mono- or dicarboxylic acid containing from 2 to 20 carbon atoms.

4. A method according to claim 2 or claim 3, wherein the acid is 2-ethyl hexanoic acid.

**Patentansprüche für die Vertragsstaaten: BE, CH, DE, FR, GB, IT, LI, NL, SE**

1. Ein Gel-Katalysator, der Zinn, Phosphor und aktives Halogen enthält (wobei aktives Halogen in diesem Zusammenhang ein direkt an Zinn oder Phosphor gebundenes Halogen bedeutet), wobei der genannte Katalysator eine Organozinnverbindung, in der sich das Zinn im vierwertigen Zustand befindet, und die Verbindung Phosphor und wenigstens ein aktives, an Zinn gebundenes Halogen enthält, oder zwei Organozinnverbindungen, worin sich das Zinn im vierwertigen Zustand befindet, wovon eine Verbindung Phosphor und die andere Verbindung wenigstens ein an Zinn gebundenes, aktives Halogen enthält, umfaßt, wobei die genannte phosphorhältige Organozinnverbindung ein Organozinnester einer Phosphorverbindung enthaltend Orthophosphorsäure, Metaphosphorsäure, Pyrophosphorsäure, Thiophosphorsäure, Phosphorige Säure, Phosphinsäure, Phosphinige Säure, Phosphonige Säure und Phosphonsäure, Phosphorylchlorid und oligomere Kondensationsprodukte von 1) Phosphonsäure, 2) Mischungen, die Phosphor- und Phosphonsäure enthalten oder 3) Estern von Phosphorsäure und Phosphonsäure und Alkoholen mit 1—20 C-Atomen ist, und der Gel-Katalysator folgende Merkmale aufweist:

a) das Molverhältnis von Zinn zu Phosphor beträgt 0.045 zu 23;

b) das Molverhältnis von Zinn zu aktivem Halogen beträgt 0,5 zu 23;

c) das Molverhältnis von Phosphor zu aktivem Halogen beträgt 0.5 zu 22; und

d) wenn Zinn, Phosphor und Halogen alle in der gleichen Verbindung enthalten sind, enthält der Katalysator eine Mono- oder Dicarbonsäure mit 2—20 C-Atomen (gegebenenfalls kombiniert mit der genannten Verbindung).

2. Eine Gel-Zusammensetzung nach Anspruch 1, worin Zinn, Phosphor und Halogen alle in der gleichen Verbindung vorliegen und diese in einer Mono- oder Dicarbonsäure mit 2—20 C-Atomen gelöst ist.

3. Ein Gel-Katalysator nach Anspruch 1, der das Reaktionsprodukt einer Zinn, Phosphor und Halogen enthaltenden Verbindung mit einer Mono- oder Dicarbonsäure mit 2—20 C-Atomen ist.

4. Ein Gel-Katalysator nach Anspruch 2 oder 3, worin die Säure 2-Äthylhexansäure ist.

5. Ein Verfahren zur Herstellung eines flexiblen Polyurethanschaumes durch Umsetzung eines polyätherhältigen Polyols mit einem polyfunktionellen Isocyanat oder Isothiocyanat in Gegenwart eines Treibmittels und eines Gel-Katalysators nach einem der vorhergehenden Ansprüche.

**Patentansprüche für den Vertragsstaat: AT**

1. Ein Verfahren zur Herstellung eines flexiblen Polyurethanschaumes durch Umsetzung eines polyätherhältigen Polyols mit einem polyfunktionellen Isocyanat oder Isothiocyanat in Gegenwart eines Treibmittels und eines Gel-Katalysators, der zinn, Phosphor und aktives Halogen enthält (wobei aktives Halogen in diesem Zusammenhang ein direkt an Zinn oder Phosphor gebundenes Halogen bedeutet), wobei der genannte Katalysator eine Organozinnverbindung, in der sich das Zinn im vierwertigen Zustand befindet, und die Verbindung Phosphor und wenigstens ein an Zinn gebundenes, aktives Halogen enthält, oder zwei Organozinnverbindungen, worin sich das Zinn im vierwertigen Zustand befindet, wovon eine Verbindung Phosphor und die andere Verbindung wenigstens ein aktives, an Zinn gebundenes Halogen enthält, umfaßt, wobei die genannte phosphorhältige Organozinnverbindung ein Organozinnester einer Phosphorverbindung aus der Gruppe enthaltend Orthophosphorsäure, Metaphosphorsäure, Pyrophosphorsäure, Thiophosphorsäure, Phosphorige Säure, Phosphinsäure, Phosphinige Säure, Phosphonige Säure und Phosphonsäure, Phosphorylchlorid und oligomere Kondensationsprodukte von 1) Phosphonsäure, 2) Mischungen, die Phosphor- und Phosphonsäure enthalten oder 3) Estern von

Phosphorsäuren und Phosphonsäuren und Alkoholen mit 1—20 C-Atomen ist, und der Gel-Katalysator folgende Merkmale aufweist:

a) das Molverhältnis von Zinn zu Phosphor beträgt 0.045 zu 23;

b) das Molverhältnis von Zinn zu aktivem Halogen beträgt 0.5 zu 23;

c) das Molverhältnis von Phosphor zu aktivem Halogen beträgt 0.5 zu 22; und

d) wenn Zinn, Phosphor und Halogen alle in der gleichen Verbindung enthalten sind, enthält der Katalysator eine Mono- oder Dicarbonsäure mit 2—20 C-Atomen, gegebenenfalls in kombinierter Form mit der genannten Verbindung.

2. Ein Verfahren nach Anspruch 1, worin der Gel-Katalysator Zinn, Phosphor und Halogen alle in der gleichen Verbindung enthält und diese in einer Mono- oder Dicarbonsäure mit 2—20 C-Atomen gelöst ist.

3. Ein Verfahren nach Anspruch 1, worin der Gel-Katalysator ein Reaktionsprodukt einer Zinn, Phosphor und Halogen enthaltenden Verbindung mit einer Mono- oder Dicarbonsäure mit 2—20 C-Atomen ist.

4. Ein Verfahren nach Anspruch 2 oder 3, worin die Säure 2-Äthyhexansäure ist.

**Revendications pour les Etats Contractants: BE, CH, DE, FR, GB, IT, LI, NL, SE**

1. Catalyseur de gélification contenant de l'étain, du phosphore et un halogène actif (halogène actif à ce propos signifiant l'halogène lié directement à l'étain ou au phosphore), ledit catalyseur comprenant un composé d'organo-étain où l'étain est à l'état tétravalent, le composé contenant du phosphore et au moins un halogène actif lié à l'étain, ou bien deux composés d'organo-étain où l'étain est à l'état tétravalent, un composé contenant du phosphore et l'autre composé contenant au moins un halogène actif lié à l'étain, ledit composé d'organo-étain contenant du phosphore étant un ester d'organo-étain d'un composé de phosphore choisi parmi les acides ortho-phosphorique, méta-phosphorique, pyro-phosphorique, thiophosphorique, phosphoreux, phosphinique, phosphineux, phosphoneux et phosphonique, le chlorure de phosphoryle et des produits oligomères de condensation de 1) l'acide phosphonique, 2) des mélanges contenant des acides phosphorique et phosphonique ou 3) des esters d'acides phosphorique et phosphonique et alcools contenant de 1 à 20 atomes de carbone, le catalyseur de gélification ayant les caractéristiques suivantes:

a) le rapport molaire de l'étain au phosphore est de 0,045 à 23;

b) le rapport molaire de l'étain à l'halogène actif est de 0,5 à 23;

c) le rapport molaire du phosphore à l'halogène actif est de 0,5 à 22; et

d) dans le cas où l'étain, le phosphore et l'halogène sont tous dans le même composé le catalyseur contient un acide mono- ou dicarboxylique ayant de 2 à 20 atomes de carbone (éventuellement sous forme combinée avec ledit composé).

2. Composition de gélification selon la revendication 1 où l'étain, le phosphore et l'halogène sont tous présents dans le même composé et celui-ci est dissous dans un acide mono- ou dicarboxylique contenant de 2 à 20 atomes de carbone.

3. Catalyseur de gélification selon la revendication 1 qui est le produit réactionnel d'un composé contenant de l'étain, du phosphore et un halogène avec un acide mono- ou dicarboxylique contenant de 2 à 20 atomes de carbone.

4. Catalyseur de gélification selon la revendication 2 ou la revendication 3 où l'acide est l'acide 2-éthylhexanoïque.

5. Procédé de préparation d'une mousse de polyuréthane flexible par réaction d'un polyol contenant un polyéther avec un isocyanate ou isothiocyanate polyfonctionnel en présence d'un agent gonflant et d'un catalyseur de gélification selon l'une quelconque des revendications précédentes.

**Revendications pour l'Etat Contractant: AT**

1. Procédé de préparation d'une mousse de polyuréthane flexible par réaction d'un polyol contenant du polyéther avec un isocyanate ou isothiocyanate polyfonctionnel en présence d'un agent gonflant et d'un catalyseur de gélification contenant de l'étain, du phosphore et un halogène actif (halogène actif à ce propos signifiant un halogène directement lié à l'étain ou au phosphore), ledit catalyseur comprenant un composé d'organo-étain où 'létain est à l'état tétravalent, le composé contenant du phosphore et au moins un halogène actif lié à l'étain, ou bien deux composés d'organo-étain où l'étain est à l'état tétravalent, un composé contenant du phosphore et l'autre composé contenant au moins un halogène actif lié à l'étain, ledit composé d'organo-étain contenant du phosphore étant un ester d'organo-étain d'un composé de phosphore choisi parmi les acides ortho-phosphorique, méta-phosphorique, pyro-phosphorique, thiophosphorique, phosphoreux, phosphinique, phosphineux, phosphoneux et phosphonique, le chlorure de phosphoryle et des produits oligomères de condensation de 1) l'acide phosphonique, 2) des mélanges contenant des acides phosphorique et phosphonique ou 3) des esters d'acides phosphorique et phosphonique et alcools contenant de 1 à 20 atomes de carbone, le catalyseur de gélification ayant les caractéristiques suivantes:

a) le rapport molaire de l'étain au phosphore est de 0,045 à 23;

b) le rapport molaire de l'étain à halogène actif est de 0,5 à 23;

c) le rapport molaire du phosphore à l'halogène actif est de 0,5 à 22; et

d) dans le cas où l'étain, le phosphore et l'halogène sont tous dans le même composé, le catalyseur contient un acide mono- ou dicarboxylique ayant de 2 à 20 atomes de carbone (éventuellement sous forme combinée avec ledit composé).

2. Procédé selon la revendication 1 où le catalyseur de gélification contient de l'étain, du phosphore et un halogène, tous présents dans le même composé, et celui-ci est dissous dans un acide mono- ou dicarboxylique contenant de 2 à 20 atomes de carbone.

3. Procédé selon la revendication 1 où le catalyseur de gélification est le produit réactionnel d'un composé contenant de l'étain, du phosphore et un halogène avec un acide mono- ou dicarboxylique contenant de 2 à 20 atomes de carbone.

4. Procédé selon la revendication 2 ou la revendication 3, où l'acide est l'acide 2-éthyl hexanoïque.